# EUROPEAN PATENT APPLICATION

(11) **EP 1 750 105 A1**
(43) Date of publication of application: **07.02.2007**
(21) Application number: 05425577.3
(22) Date of filing: 03.08.2005
(51) Int. Cl.: G01F 23/66, G01F 23/64, G01F 23/72

(54) **Device for indicating the liquid level inside a tank**

(71) Applicant: INCON s.r.l., 20139 Milano (IT)
(72) Inventor: Marchetti, Roberto, 20139 Milano (IT)
(74) Representative: Checcacci, Giorgio

(57) **Abstract**

The invention refers to a device for visually indicating the liquid level inside a tank comprising a float partially immersed in said liquid and vertically movable in the tank, and a visualisation system of the level of said liquid, characterised in that said visualisation system comprises: a) an at least partially transparent visualisation container, suitable for being positioned outside said tank; b) a visualisation liquid; and c) a measurement tube in said tank around which said float slides, and in which a piston tightly slides and separates an upper part filled with said visualisation liquid and a lower part. Said piston is joined by magnetic coupling means to said float. Said piston moves said visualisation liquid into or out the visualisation container according to the vertical position of the float. An additional communication tube links said lower part to atmospheric air or to the upper part of the visualisation container filled with a service liquid having a specific weight lower than the on of said visualisation liquid.

## Description

The present invention refers to a device for visually indicating the liquid level inside a tank.

The device of the present invention has an application in all types of reservoirs; a preferred, although not exclusive, application is the one in which an immediate visual check of the liquid level in a tank is required, even from a certain distance, in the absence of transducers or electrical connections of any type.

As known, the liquid level in a tank can be visually measured by exploiting the communicating vessel principle, connecting a transparent element to the wall of the tank, through at least one fitting arranged below the surface, so that the liquid level inside the transparent element is equal to the liquid level inside the tank. This measurement system has some disadvantages, such as, for example: 1) the risk of spilling of the tank content in case of breaking of the transparent element, 2) difficulty in making the transparent element in case of tanks subjected to high pressure and/or temperatures, 3) the need to make one or two openings one of which is below the liquid level in the tank for the two fittings, 4) the difficulty of cleaning in case of washing inside the tank with the need to disassemble the outer elements for separate cleaning, and 5) the possibility of visualizing the liquid level in the tank only in areas adjacent to the tank and exclusively at the same height, thus not being able to be used, for example, for underground tanks.

Another device for indicating the liquid level inside a tank comprises the use of mechanical flags, as disclosed in patent application US 2005056092. In such a device, a magnet is incorporated in a float that, depending upon the height of the liquid, runs along a tube arranged outside the tank and connected to it through a fitting disposed below the liquid level. A rod that extends for the entire height of the tank, containing such mechanical flags having two different coloured faces (light and dark) is arranged adjacent to the outer wall of the tube. As the magnet passes, the flags rotate by 180° and thus change their shown colour, from light to dark, or vice-versa, according to the movement direction. Therefore, the visualisation system to determine the liquid level inside the tank is provided by a general appearance of the rod that gradually changes colour according to the vertical position of the magnet. However, this type of level indicator has also the disadvantage, as well as those ones cited above at points 3), 4) and 5), to require a very large number of mechanical flags when the rod is particularly long, with consequent economic, maintenance and functionality problems through time.

A known device for indicating the liquid level inside a tank, named Level Monitor and commercialised by Start Italiana, exploits a float too, incorporating a magnet, which slides along a shaft based upon the height of the liquid and drags by magnetic attraction a metal body inside the shaft. In this case, however, the visualisation system is provided with an indicator head, positioned on the top of such a shaft and connected to the sliding metal body that slides along such a shaft, comprising a high precision clock mechanism with double reading scale. Such a device, whilst solving some of the aforementioned problems, nevertheless has other disadvantages, such as those of not being able to be read and/or easily identified from a certain distance, of requiring a certain free space above the tank and of not being able to be positioned in remote areas with respect to the tank.

Therefore, the problem of the present invention is that of providing a device for visually indicating, even from a certain distance, the liquid level inside a tank, while keeping simplicity and flexibility of installation and maintenance, air-tightness, safety with respect to risks of spilling of the liquid contained in the tank.

The invention therefore refers to a device for visually indicating the liquid level present inside a tank according to claim 1.

The tank of the invention can be, for example, a water tank for various uses, such as for domestic use, use in agriculture, in fire-prevention systems, and similar; a tank or cistern for fuels such as petrol, diesel fuel, oils or similar, for supply pumps, distributors, boats or vehicles; a tank that can be used in the food industry to contain oil, beer, wine, milk and various drinks; a tank that can be used in the chemical and pharmaceutical industry to contain liquid chemical compounds, or any other type of tank that contains any type of liquid.

In particular, the invention relates to a device for visually indicating the liquid level present inside a tank, wherein such device comprises:
- a float partially immersed in said liquid and vertically movable in the tank, and
- a visualisation system of the level of said liquid,
characterised in that said visualisation system comprises:
a) an at least partially transparent visualisation container, suitable for being positioned outside said tank;
b) a visualisation liquid; and
c) transducer means joined to said float and to said visualisation container for moving said visualisation liquid into said visualisation container according to the vertical position of the float in the tank.

An advantage associated with the device of the present invention consists in the possibility to be able to have a visual indication of the liquid level inside a tank, even from a certain distance, while keeping the features requested in many uses, such as, for example, installation simplicity and flexibility, easy removal for washing inside the tank and absence of transducers or any type electrical connections.

Preferably, the at least partially transparent visualisation container comprised in the device of the present invention is a tube; this embodiment allows to obtain an easy to handle visualisation container, having such a shape to allow easy movement of the visualisation liquid inside therein and with the possibility of being able to join a graduated scale to it for accurate identification of the liquid amount present inside the tank, without any practical difficulty. More preferably, such a tube is totally transparent, for a complete visual inspection of the visualisation liquid contained therein.

Preferably, the visualisation liquid generally consists of water or other liquids capable of being easily moved in said visualisation container; more preferably, said visualisation liquid is coloured by particular additives, so as to make it more visible from a certain distance inside said visualisation container.

Preferably, the transducer means joined to said float and to said visualisation container comprise a measurement tube positioned inside said tank and containing said visualisation liquid inside thereof.

More preferably, said measurement tube is in vertical position so that the upper part of said measurement tube is at the same height of the upper part of the tank, at an opening of the tank itself, and the lower part extends so as to be as close as possible to the lowest point of the tank. This embodiment has the advantages to allow said measurement tube to be easily inserted/removed into/from said tank, to avoid to make openings below the liquid level and to be able to exploit the entire length of said measurement tube for the purposes of the measurement of the liquid present in the tank.

Preferably, said measurement tube is closed and watertight sealed, capable of withstanding the internal pressures foreseen in the tank. Therefore, this embodiment has the advantage to allow the liquid contained in the tank and the visualisation liquid to be in two separate environments, both still being inside said tank, thus avoiding the mixing of one liquid with the other.

Moreover, said measurement tube is connected to said visualisation container to allow to said visualisation liquid to move from said measurement tube to said visualisation container, and vice-versa. Preferably, said connection allows said visualisation liquid to come out from the upper part of said measurement tube and to enter into the lower part of said visualisation container, and vice-versa.

Preferably, said measurement tube further comprises inside therein at least one cursor of a shape and size as to slide inside said measurement tube, joined to said float by coupling means so that the cursor is vertically movable together with the float, said cursor splitting the volume inside said measurement tube into two distinct parts, an upper part and a lower part. This embodiment has the advantage to prevent said visualisation liquid, present in said upper part of said measurement tube, to be able to pass from said upper part to said lower part and also allows said cursor to move said visualisation liquid according to the position of the float.

Preferably, said cursor is a piston equipped with suitable gaskets adhering to the inner wall of the measurement tube that promote the sealed sliding of the piston itself inside said measurement tube.

Said cursor can be made from ferromagnetic material or from non-ferromagnetic material.

Said cursor is joined to said float by coupling means.

Preferably, when said cursor is made from ferromagnetic material, said coupling means are of the magnetic type and comprise a magnet positioned inside the float.

Preferably, when said cursor is made from non-ferromagnetic material, said coupling means are of the magnetic type and comprise a magnet positioned inside the float and a ferromagnetic element joined to the cursor.

Alternatively, said coupling means comprise a magnet joined to said cursor and a ferromagnetic element joined to the float.

Typically, the float is of such a shape and size to slide adjacent to or around the measurement tube according to the liquid level inside the tank. Preferably, said float has such a toroidal shape to slide around the measurement tube.

Said cursor follows the movements of the float comprising said magnet by magnetic attraction through the ferromagnetic element joined to it and, consequently, slides along the inner wall of the measurement tube, made from non-magnetic material, such as for example, plastic, stainless steel or other alloys, in which it is housed, so as not to interfere with said magnetic attraction.

Consequently, said cursor sliding allows the movement of said visualisation liquid according to the position of the float. Therefore, for example, when the liquid level rises inside the tank, the upward cursor sliding will cause a movement of the visualisation liquid towards the visualisation container, where the new level of the visualisation liquid corresponding to the new liquid level inside the tank shall be visualised.

Preferably, said measurement tube and said visualisation container have the same section. This embodiment, starting from an initial situation in which the liquid level inside the tank is at the same height as the visualisation liquid level, has the advantage to allow a direct correspondence between the liquid level in the measurement tube and that of the visualisation liquid in the visualisation container.

Alternatively, said measurement tube and said visualisation container can have sections of different sizes; in this case, it is possible to make scales with reading values based upon said section sizes in said visualisation container.

Preferably, the visualisation container of the present invention is connected to said visualisation container by means of flexible connection piping in which said visualisation liquid moves. This embodiment allows said visualisation container to be positioned both in a suitable position adjacent to the tank and in a remote position with respect to said tank, which is a particularly advantageous feature when the area surrounding the tank is not easy accessible or in any case when the space available around it is such to render difficult the visualisation device installation.

In a first embodiment, preferably, said measurement tube further comprises inside therein a coaxial communication tube for connecting said lower part of the measurement tube with the outside of the tank. This preferred embodiment allows the air to flow into or from said lower part of the measurement tube. By this way, the air can flow in that part of volume below said cursor that would otherwise be in depression when the cursor moves upwards following an increase in the liquid level inside the tank. Said entry of air thus allows continuous compensation of the volume variations in the area below the cursor, without generating overpressures or depressions that would cause counteraction forces on the cursor, allowing said cursor to remain at the float and to freely move according to each movement of the float itself, whatever is the liquid level inside the tank.

In a second embodiment, said communication tube connects said lower part of the measurement tube with the upper part of said visualisation container.

Preferably, in said second embodiment, said lower part of said measurement tube, said communication tube and said upper part of said visualisation container contain a service liquid, having a specific weight lower than that one of said visualisation liquid.

Therefore, in this second embodiment, said visualisation container contains both the visualisation liquid and the service liquid, wherein the service liquid occupies the upper part of said visualisation container, having a specific weight lower than that one of the visualisation liquid, while the visualisation liquid occupies the lower part. Preferably, to better distinguish the two liquids in said visualisation container, the two liquids can be coloured by additives that allow to give two clearly different colours.

This second embodiment has the advantage to allow said visualisation container to be positioned at a different height, for example higher, with respect to said tank, thus allowing easy visualisation of the levels of the liquids contained in earthed or partially earthed tanks too.

Further characteristics and advantages of the present invention shall become clearer through the following detailed description of a preferred embodiment thereof, made with reference to the attached drawings, in which:
- figure 1 represents a schematic view in vertical scale of a device according to the first embodiment of the present invention;
- figure 2 represents another schematic view in vertical scale of a device according to the first embodiment of the present invention, wherein the liquid level inside the tank is higher than that one highlighted in figure 1;
- figure 3 represents an enlargement of the area contained in figures 1 and 2 relative to the float and to the elements joined to it;
- figure 4 represents a schematic front view of a device according to the second embodiment of the present invention.

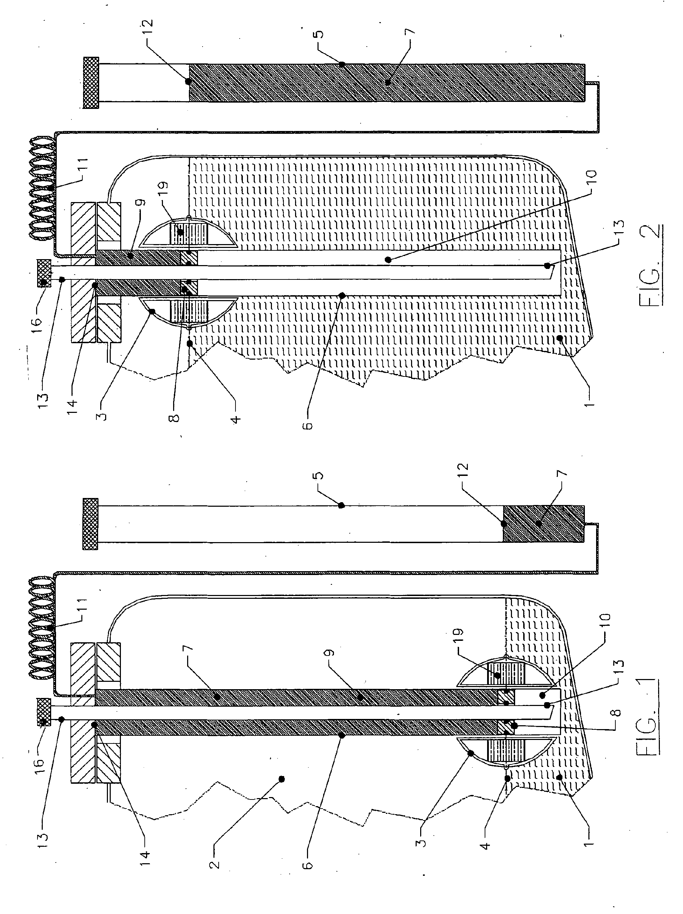

A preferred embodiment of the present invention is shown in figure 1, wherein conventional elements generally present in a device for visually indicating the level 4 of a liquid 1 present inside a tank 2 are highlighted, amongst other things, such as, for example, the float 3 partially immersed in the liquid 1, vertically movable in the tank 2 according to the level 4 of the liquid 1 inside the tank 2.

With reference to figure 1 too, a level visualisation system 4 of the liquid 1 is shown, according to the present invention, comprising: a transparent visualisation container 5 vertically positioned outside the tank 2 and a closed and watertight sealed measurement tube 6, vertically positioned inside the tank 2. The measurement tube 6 contains inside therein a visualisation liquid 7 so that the liquid 1 present inside the tank 2 and the visualisation liquid 7 do not mix one with each other, and it is connected to the visualisation container 5 to allow the visualisation liquid 7 to move from the measurement tube 6 to the visualisation container 5, and vice-versa.

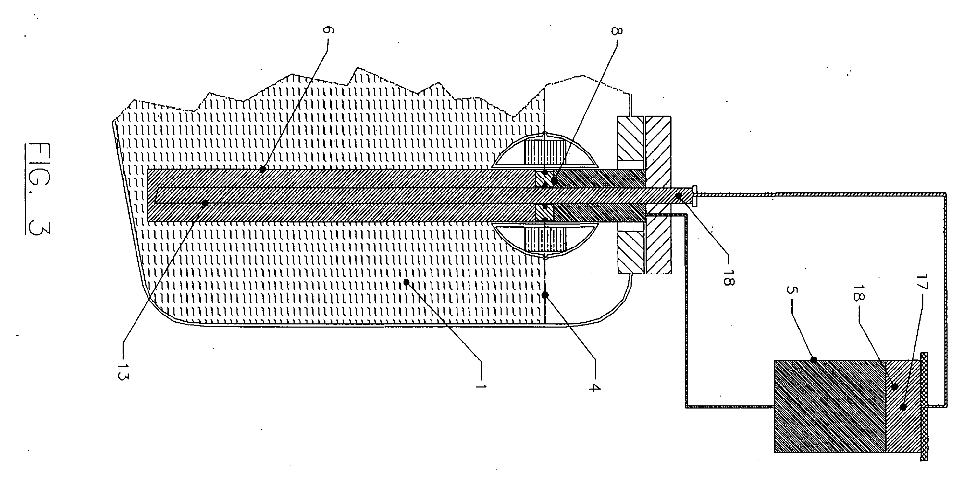

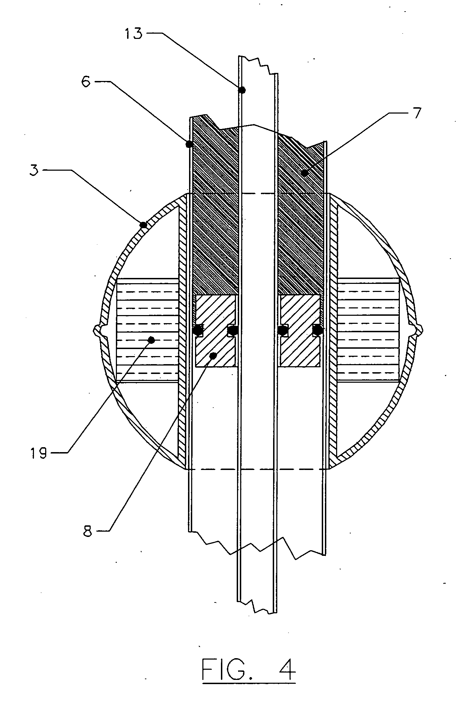

With reference to figure 1 too, a piston 8 that slides inside the measurement tube 6 and that splits the volume inside the measurement tube 6 into an upper part 9 and a lower part 10 is shown, so as to prevent the visualisation liquid 7 present in the upper part 9 from passing into the lower part 10. Moreover, as better highlighted in the enlargement of figure 4, the measurement tube 6 is magnetically joined to the float 3 through a magnet 19 positioned inside the float 3 and to a ferromagnetic element joined to the piston 8. The piston 8 follows by magnetic attraction the movements of the float 3: when the level 4 of the liquid 1 inside the tank 2 rises, as shown in figure 2, the float 3 rises too and, by magnetic attraction, the piston 8 rises too and it consequently moves the visualisation liquid 7 from the measurement tube 6 to the visualisation container 5, through a connecting piping 11, possibly flexible.

The measurement tube 6 and the visualisation container 5 have the same section, as can be noted from figures 1 and 2, allowing a direct correspondence between the level 4 of the liquid 1 in the measurement tube 6 and the level 12 of the visualisation liquid 7 in the visualisation container 5.

With reference to figure 1 too, a first embodiment of the present invention is shown, wherein the measurement tube 6 further comprises inside therein a coaxial communication tube 13 for connecting said lower part 10 of the measurement tube 6 to the outside of the tank 2. The communication tube 13 is placed through an opening 14 situated in the upper part 9 of the measurement tube 6 and is sealed or screwed to such a watertight sealed upper part 9; the upper part of the communication tube 13 slightly projects above the upper part 9 of the measurement tube 6. In the measurement tube 6, the piston 8 has a central sliding seat, on the same vertical axis on which the opening 14 crossed by the communication tube 13 is situated, of such a shape and size to allow the piston 8 itself to sealably slide along the communication tube 13, when it follows by magnetic attraction the movements of the float 3. Moreover, the communication tube 13 has a hole 16 in its upper part allowing the external air to flow into the lower part 10 of the measurement tube 6, and vice-versa. As is clear from figure 2, the rise of the level 4 of the liquid 1 inside the tank 2 causes the movement upwards of the visualisation liquid 7 and thus the volume increase in the lower part 10 of the measurement tube 6. The air filling of such a volume situated below the piston 8, through the communication tube 13, prevents the creation of overpressures or depressions caused, respectively, by the volume decrease or increase that would cause thrusts onto the piston 8 tending to counteract its movement inside the measurement tube 6, and allows to move according to each movement of the float 3 itself, whatever the level 4 of the liquid 1 is inside the tank 2.

With reference to figure 3, a second embodiment of the present invention is shown, wherein the measurement tube 6 further comprises inside therein a coaxial communication tube 13 connecting the lower part 10 of the measurement tube 6 with the upper part 17 of the visualisation container 5.

In this second embodiment, the lower part 10 of the measurement tube 6, the communication tube 13 and the upper part 17 of the visualisation container 5 contain a service liquid 18 having a specific weight close to but lower than that one of the visualisation liquid 7. Therefore, the visualisation container 5 contains both the visualisation liquid 7 and the service liquid 18 that occupies the upper part 17 of the visualisation container 5, having a lower specific weight. The visualisation liquid 7 and the service liquid 18 are coloured with additives giving two clearly different colourations, in order to better highlight the level of the visualisation liquid 7 in the visualisation container 5.

The filling of the volume arranged below the piston 8 by the service liquid 18 has the purpose of balancing the hydrostatic thrust given to the piston 8 by the visualisation liquid 7 arranged above it. By this way, the elimination of forces caused by the hydrostatic pressure of the visualisation liquid 7 on the piston 8 that could overcome the magnetic attraction force and thus cause the separation of the constraint between magnet 19 and piston 8 which allows the piston 8 itself to remain at the float 3 and to move according to each movement of the float 3 itself is ensured, whatever the level 4 of the liquid 1 is inside the tank 2. In this second embodiment, the presence of the service liquid 18 allows the visualisation liquid 7 to receive a further upward thrust, allowing the positioning of the visualisation container 5 at a greater height than the tank 2, with the advantage to have an easy visualization on the outside also of the level 4 of the liquid 1 contained in an earthed or partially earthed tank 2.

Of course, the above described embodiments are to be understood as mere non-limiting illustrations of some possible embodiments of the device of the present invention, while remaining clearly understood that any element inherent to the device itself can be varied by the man skilled in the art to satisfy specific and contingent requirements, whilst still remaining within the scope of what described and claimed.

## Claims

1. Device for visually indicating the level (4) of a liquid (1) present inside a tank (2), wherein such a device comprises:
- a float (3) partially immersed in said liquid (1) and vertically movable in the tank (2), and
- a visualisation system of the level (4) of said liquid (1),
**characterised in that** said visualisation system comprises:
a) an at least partially transparent visualisation container (5), suitable for being positioned outside said tank (2);
b) a visualisation liquid (7); and
c) transducer means joined to said float (3) and to said visualisation container (5) for moving said visualisation liquid (7) into said visualisation container (5) according to the vertical position of the float (3) in the tank (2).

2. Device according to claim 1, wherein said visualisation container (5) is a tube.

3. Device according to claim 2, wherein said tube is totally transparent.

4. Device according to claim 1, wherein said visualisation liquid (7) is coloured.

5. Device according to claim 1, wherein said transducer means comprise a closed and watertight measurement tube (6), positioned inside said tank (2), containing inside therein said visualisation liquid (7) so that said liquid (1) present inside said tank (2) and said visualisation liquid (7) do not mix one with each other, and connected to said visualisation container (5) to allow said visualisation liquid (7) to move from said measurement tube (6) to said visualisation container (5) and vice-versa.

6. Device according to claim 5, wherein said measurement tube (6) is made from non-magnetic material.

7. Device according to claim 5, wherein said measurement tube (6) further comprises inside therein at least one cursor (8) of such a shape and size to slide inside said measurement tube (6), joined to said float (3) through coupling means so that the cursor (8) is vertically movable together with the float (3), said cursor (8) splitting the volume inside said measurement tube (6) into an upper part (9) and a lower part (10) so as to prevent said visualisation liquid (7) present in said upper part (9) to be able to pass from said upper part (9) to said lower part (10), wherein said cursor (8) moves said visualisation liquid (7) according to the position of the float (3).

8. Device according to claim 7, wherein said coupling means are of the magnetic type and comprise a magnet (19) positioned inside the float (3) and a ferromagnetic element joined to the cursor (8).

9. Device according to claim 7, wherein said coupling means are of the magnetic type and comprise a magnet (19) joined to said cursor (8) and a ferromagnetic element joined to the float (3).

10. Device according to claim 5, wherein said measurement tube (6) further comprises inside therein a coaxial communication tube (13) connecting said lower part (10) of the measurement tube (6) with the outside of the tank (2) to allow the air to flow into or from said lower part (10) of the measurement tube (6).

11. Device according to claim 5, wherein said measurement tube (6) further comprises inside therein a coaxial communication tube (13) connecting said lower part (10) of the measurement tube (6) with the upper part (17) of said visualisation container (5).

12. Device according to claim 11, wherein said lower part (10) of said measurement tube (6), said communication tube (13) and said upper part (17) of said visualisation container (5), contain a service liquid (18) having a specific weight lower than that one of said visualisation liquid (7).

13. Device according to claim 11 wherein said visualisation container (5) is arranged at a greater height with respect to said tank (2).

14. Device according to claim 5 wherein said measurement tube (6) and said visualisation container (5) have the same section.

15. Device according to claim 1 wherein said visualisation container (5) is arranged in a remote position with respect to said tank (2).

## Amended claims

### Amended claims in accordance with Rule 86(2) EPC.

**1.** Device for visually indicating the level (4) of a liquid (1) present inside a tank (2), wherein such a device comprises:
- a float (3) partially immersed in said liquid (1) and vertically movable in the tank (2), and
- a visualisation system of the level (4) of said liquid (1),
**characterised in that** said visualisation system comprises:
a) an at least partially transparent visualisation container (5), suitable for being positioned outside said tank (2);
b) a visualisation liquid (7); and
c) transducer means comprising a closed and watertight measurement tube (6), adapted to be positioned inside said tank (2), containing inside therein said visualisation liquid (7) so that said liquid (1) present inside said tank (2) and said visualisation liquid (7) do not mix one with each other,
wherein
- said transducer means are joined to said float (3) and to said visualisation container (5) to allow said visualisation liquid (7) to move from said measurement tube (6) to said visualisation container (5) and vice-versa according to the vertical position of the float (3) in the tank (2), and
- said measurement tube (6) further comprises inside therein at least one piston (8) of such a shape and size to slide inside said measurement tube (6), joined to said float (3) through magnetic type coupling means so that the piston (8) is vertically movable together with the float (3), said piston (8) splitting the volume inside said measurement tube (6) into an upper part (9) and a lower part (10) so as to prevent said visualisation liquid (7) present in said upper part (9) to be able to pass from said upper part (9) to said lower part (10), wherein said piston (8) moves said visualisation liquid (7) according to the position of the float (3).

**2.** Device according to claim 1, wherein said visualisation container (5) is a tube.

**3.** Device according to claim 2, wherein said tube is totally transparent.

**4.** Device according to claim 1, wherein said visualisation liquid (7) is coloured.

**5.** Device according to claim 1, wherein said measurement tube (6) is made from non-magnetic material.

**6.** Device according to claim 1, wherein said coupling means comprise a magnet (19) positioned inside the float (3) and a ferromagnetic element joined to the piston (8).

**7.** Device according to claim 1, wherein said coupling means comprise a magnet (19) joined to said piston (8) and a ferromagnetic element joined to the float (3).

**8.** Device according to claim 1, wherein said measurement tube (6) further comprises inside therein a coaxial communication tube (13) adapted to connect said lower part (10) of the measurement tube (6) with the outside of the tank (2) to allow the air to flow into or from said lower part (10) of the measurement tube (6).

**9.** Device according to claim 1, wherein said measurement tube (6) further comprises inside _therein a coaxial communication tube (13) connecting said lower part (10) of the measurement tube (6) with the upper part (17) of said visualisation container (5).

**10.** Device according to any preceding claim, wherein said lower part (10) of said measurement tube (6), said communication tube (13) and said upper part (17) of said visualisation container (5), contain a service liquid (18) having a specific weight lower than that one of said visualisation liquid (7).

**11.** Device according to claim 9 wherein said visualisation container (5) is arranged at a greater height with respect to said tank (2).

**12.** Device according to claim 1 wherein said measurement tube (6) and said visualisation container (5) have the same section.

**13.** Device according to claim 1 wherein said visualisation container (5) is adapted to be arranged in a remote position with respect to said tank (2).
